# EUROPEAN PATENT SPECIFICATION

(11) **EP 4 653 175 B1**
(45) Date of publication and mention of the grant of the patent: **11.03.2026**
(21) Application number: 24382537.9
(22) Date of filing: 20.05.2024
(51) Int. Cl.: B29C 51/42, B29C 51/10, B29C 51/26, B29L 31/00

(54) **THERMOFORMING METHOD AND MACHINE**
THERMOFORMVERFAHREN UND -MASCHINE
PROCÉDÉ ET MACHINE DE THERMOFORMAGE

(43) Date of publication of application: 26.11.2025
(73) Proprietor: Ulma Packaging, S.Coop., 20560 Oñati (ES)
(72) Inventor: GALINDO MONTERO, Ivan, 20560 OÑATI (ES); BERROCOSO IMAZ, Iñaki, 20560 OÑATI (ES)
(74) Representative: Galbaian S.Coop.

(56) References cited:
- EP-A2- 2 298 536
- EP-B1- 0 979 715
- US-A- 4 306 856
- US-A1- 2021 362 390

## Description

### TECHNICAL FIELD

The present invention relates to thermoforming methods and machines.

### PRIOR ART

In product packaging, thermoforming machines are well known, in which a plastic film is heated and then formed into the desired shape. This film is sealed with another film (which may or may not be formed in this way), and the product is packaged between the two films.

When a film is formed, a cavity of a given depth is generated, and the cavity comprises a base, at least one wall extending from the base and a connecting zone serving as a transition between the base and the wall.

During forming the film is stretched, and the deeper the cavity, the greater the stretching. It is also known that the base is generally the area that undergoes the least stretching during forming, with the second and third areas being the most critical, as they have to withstand the greatest stretching.

In order to stretch a foil, it is convenient to heat it beforehand because the temperature increase increases the plasticity of the foil and therefore its ability to stretch during forming.

This forming can be done by vacuum and/or air blowing, but as the required forming depth increases and due to the stretching requirements, with conventional vacuum and/or air blowing forming methods it is not possible to form the film above a certain depth, because the film cannot be stretched adequately and the film breaks during forming or weaknesses are generated in the film (areas with a minimum thickness), resulting in a cavity that is easy to break.

Therefore, in conventional methods, from certain depths onwards, a mechanical aid is used to form the film in combination with vacuum and/or blowing. The mechanical aid allows a more homogeneous stretching of the film and solves the problems mentioned above.

However, the use of mechanical aid in a forming station of a thermoforming machine has some disadvantages. For example, a machine with a mechanical aid, such as a core support, requires, in addition to the mechanical aid, the elements that drive it, and this implies the occupation of a vertical space that sometimes complicates the arrangement of other elements of the machine or from the packaging line above said forming station, where the mechanical aid is located, and makes the machine or the packaging line to occupy a greater space in plant. This is why it is important to solve the problems described above without the need to use mechanical aid, and solutions along these lines are known.

US3386503A discloses a solution in which a heating plate which is heated to a certain temperature and which comprises a certain shape and an annular insulator is used to ensure that certain areas of the film are heated less than others (in particular the second area comprising the connection area between the base and the wall of the cavity after the film has been formed), thus trying to prevent at least the second zone from acquiring a high stretching capacity that would result in stretching that would excessively reduce the thickness of the cavity in that zone. Although the insulator may help to achieve the purpose at least initially, as the machine's operating time increases, the temperature becomes more homogeneous along the heating plate and the cavities generated after a certain time would comprise the weakness that is to be avoided, making this solution unsuitable for production, as the temperature of the insulator cannot be controlled.

In US2009272073A1 the use of mechanical aid and insulators described in US3386503A is avoided. To this end it discloses a solution comprising a heating station having a heating plate with independent zones. The independent zones are independently controlled, so that each zone can be heated as much as required (or even kept off). The disadvantage of this solution is that it is complex, costly financially at least because it requires many heating elements, and requires very precise control to try to avoid the temperature homogenisation problem described for US3386503A, which is not always possible to avoid.

In EP2298536A2, a packaging machine with a heating plate comprising several heater elements is disclosed. In a first heating step the film is heated, and in a second heating step different parts of the film are selectively heated to different temperature levels thanks to the selective control upon the plurality of heaters of the heating plate. The heaters are distributed in the heating plate uniformly or in matrix form.

There is therefore a need for a simple, reliable and production-valid solution to avoid the use of any mechanical aid.

### DISCLOSURE OF THE INVENTION

The object of the invention is to provide a plastic film thermoforming method and a thermoforming machine, to avoid the use of mechanical aid during forming, as defined in the claims.

A first aspect of the invention relates to a method in which at least one forming area of plastic film is heated and formed after heating. The method comprises a first heating step in which said forming area is heated to a first temperature, a second heating step after the first heating step, in which an external contour of said forming area surrounding a central zone of said forming area is heated to a second temperature higher than the first temperature, such that a temperature difference is generated between the external contour and the central zone of said forming area, and a forming step subsequent to the heating steps, in which said forming area is formed.

The method makes it possible to avoid a mechanical aid due to the fact that a temperature gradient is achieved between different zones of the forming area which therefore comprise different plasticity properties during forming, and it is also done in a reliable and production effective way since the heat sources for the different temperatures have no risk of interacting and it is not possible for the temperature to homogenise as was the case in the state of the art.

In the first heating step, the entire forming area is heated to the same temperature higher than the ambient temperature (to the first temperature). In the first heating step the temperature of the forming area is raised by a first temperature gradient, thus.

At the start of the second heating step, the starting temperature of the forming area is the first temperature, and the external contour is heated to the second temperature which is higher than the first temperature, resulting in a temperature difference between the central area, which has not been heated to the second temperature, and the external contour of the forming area. In this second heating step, the external contour is heated by a second temperature gradient.

Dividing the heating of the external contour into two heating steps simplifies the machine where the method is implemented, since in each case it is required to include a tool for the heating task at a single corresponding temperature (the first temperature in one case and the second temperature in the other case), and does not require specific designs or configurations of any tool, or other technical complexities such as isolating the two zones that need to be at different temperatures, for example.

Doing the heating of the forming area in two sequential heating steps also allows heating a temperature gradient in each case and avoids having to heat the forming area (or part of it) from room temperature to the maximum temperature (second temperature in this case), which allows speeding up the method as less heating time is required in each step. Additionally, since it is done in two steps, while the second heating step is being implemented on at least one first forming area, the first heating step can be implemented on at least one second forming area, which increases the flexibility and productivity of the machine where the method is implemented.

In this way, the proposed method makes it possible, in addition to dispensing with the mechanical aid, to do so in a way that is reliable for use in production, in a way that increases the productivity of the machine where it is implemented, and at the same time in a way that makes it possible to obtain or require a machine that is simpler and easier to operate.

The first heating step is executed at a preheating station of the thermoforming machine, and the second heating step and the forming step are executed at a forming station of said thermoforming machine. The forming station is arranged downstream of the preheating station.

The method comprises a forward step between the first heating step and the second heating step in which the forming area heated in the preheating station is moved from the preheating station to the forming station.

In the second heating step the only part of the forming area that is directly heated to the second temperature is the external contour, with an annular heating plate of the forming station.

A second aspect of the invention relates to a thermoforming machine comprising a pre-heating station in which a forming area of a plastic film is heated and a forming station downstream of the pre-heating station in which said forming area heated in the pre-heating station is formed.

The pre-heating station is configured to heat the forming area to a given first temperature. The forming station is configured to heat an external contour of said forming area surrounding a central zone of said forming area to a second temperature higher than the first temperature, such that a temperature difference is generated between the external contour and the central zone of the forming area, and to form said forming area. The forming station comprises an annular heating plate. The advantages described for the method are also obtained with the machine.

These and other advantages and features of the invention will become apparent in view of the figures and the detailed description of the invention.

### DESCRIPTION OF THE DRAWINGS

Figure 1 shows an embodiment of a thermoforming machine according to the invention.
Figure 2 shows a plan view of a plurality of cavities generated after a forming step applied on a film, according to an embodiment of the method of the invention.
Figure 3 is a side sectional view of the cavities of Figure 2.
Figure 4 shows a plan view of two areas of a film at different stages of an embodiment of the method according to the invention.
Figure 5 represents a width of an external contour of a forming area of the film.
Figure 6 is a bottom view of a heating plate of a forming station of an embodiment of the machine of the invention.

### DETAILED DISCLOSURE OF THE INVENTION

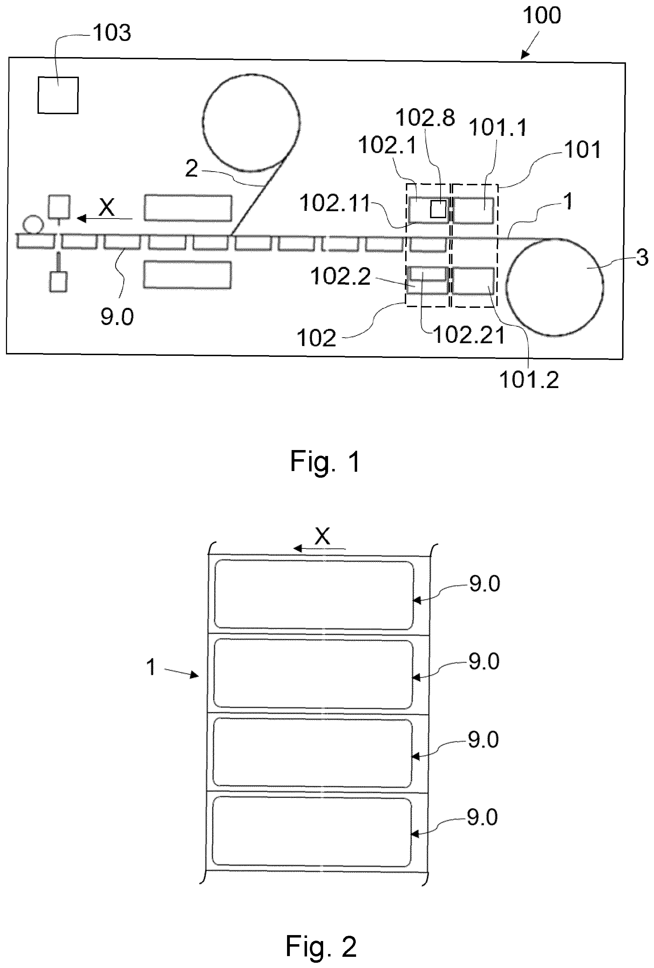

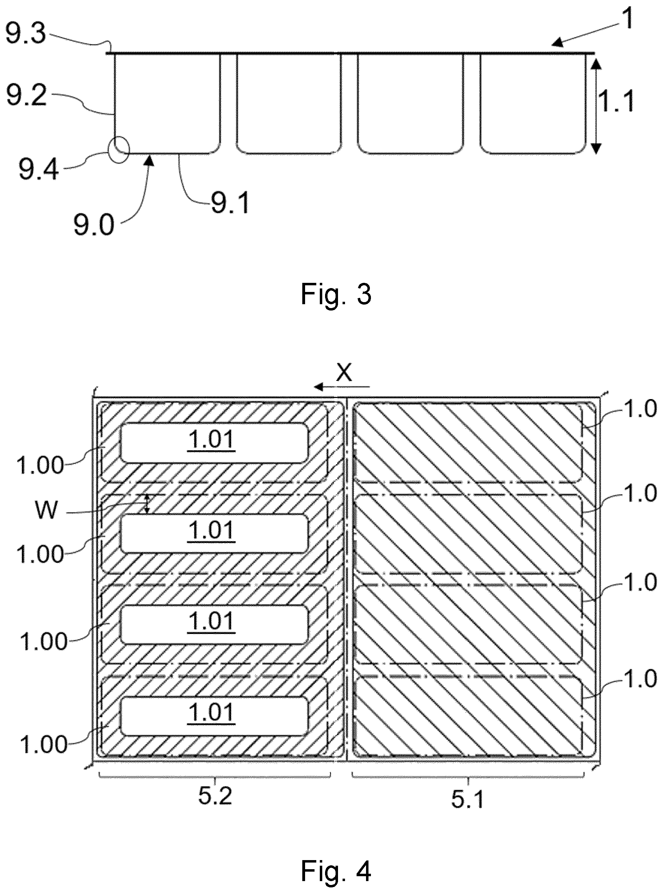

A first aspect of the invention relates to a method of thermoforming a preferably continuous plastic film 1 (fed from a coil 3 in a forward direction X), for a thermoforming machine 100 as shown in Figure 1 by way of example. In the method, at least one forming area 1.0 of the plastic film 1 is heated, and the forming area 1.0 is formed after heating. After forming, the forming area 1.0 is transformed into a cavity 9.0 as depicted in Figures 2 and 3, and said cavity 9.0 comprises a central base 9.1, at least one wall 9.2 extending from said base 9.1 and surrounding said base 9.1, and a connecting area 9.4 between said base 9.0 and said wall 9.2.

Once the film 1 has been formed a tray is generated, said tray comprising the cavity 9.0 and a flap 9.3 surrounding the cavity 9.0. If the tray is used for packaging products, after the product to be packaged is placed in the tray, the tray can be closed with a lid film 2.

The forming area 1.0 slightly changes its shape at the base 9.1 in comparison to the rest (wall 9.2 and connection area 9.4), after the forming, so that the forming area 1.0 can be divided into at least two different zones depending on the result after forming:
- First zone: zone of forming area 1.0 comprising what becomes base 9.1 after forming area 1.0 is formed.
- Second zone: zone of forming area 1.0 comprising what becomes connecting zone 9.4 and wall 9.2 after forming area 1.0.

The first zone requires less stretching during forming of the forming area 1.0 than the second zone, so a priori it does not need to acquire the same plasticity as the second zone and therefore does not need to be heated to the same extent.

The method comprises a first heating step in which the forming area 1.0 is heated to a first temperature (see grating of a first area 5.1 in Figure 4), generally starting from the temperature of the room where the machine 100 is located. This first temperature corresponds to the temperature that confers the necessary plasticity to the first area, which may be, for example, 60° in some films 1.

The method further comprises a second heating step subsequent to the first heating step, wherein an external contour 1.00 of the forming area 1.0 surrounding a central area 1.01 of said forming area 1.0, but not said central area 1.01, is heated to a second temperature (see grating of a second area 5.2 in Figure 4) higher than the first temperature, such that a temperature difference is generated between the external contour 1.00 and the central area 1.01 of the forming area 1.0 as required. Said second temperature may be, for example, 90° in some films 1. In the second heating step, heat is only applied to said external contour 1.00 of the forming area 1.0, whereby heat may also be applied to zones of the film 1 outside the forming area 1.0, but not by actively applying heat to the central zone 1.01 to heat said zone to the second temperature so as not to ensure a temperature gradient between the first zone and the second zone of the forming area 1.0.

In the second heating step the film is arranged in a forming station 201 comprising an upper tool 102.1 and a lower tool 102.2 configured to be relatively displaced. The lower tool 102.2 comprises a cavity 102.21 equivalent to the cavity 9.0 intended to be formed in the film 1. The forming area 1.0 of the film 1 corresponds with the part of said film 1 which is arranged over said cavity 102.21 of the lower tool 102.2 when the lower tool 102.2 and the upper tool 102.1 clamp the film 1.

The base 9.1 is in the centre of the cavity 9.0 generated as a result of forming the forming area 1.0, thus coinciding at least in part with the central zone 1.01. This allows in a simple way the needs of each of the zones of the forming area 1.0 to be formed to be covered, the advantages previously described being obtained.

It has been found that during forming there is an excessive decrease in thickness of the film 1 in the forming area 1.0, which can lead to a weakening of the connecting zone 9.4 and consequently increases the risk of the film 1 breaking during or after forming. In order to reduce this risk, it is proposed to restrict the stretching capacity of film 1 in the connecting zone 9.4 compared to the stretching capacity of the walls 9.2.

The method thus avoids heating the part of the forming area 1.0 which becomes the connecting zone 9.4 to the same temperature as the part of the forming area 1.0 which becomes the wall 9.2, in order to make it less stretchable. It has been found that instead of raising the temperature of the part of the forming area 1.0 which is transformed into the wall 9.2, it is sufficient to keep the temperature of the part of the forming area 1.0 which is transformed into the connecting zone 9.4 at the same temperature (first temperature) as the first zone, because the decrease of the stretching capacity supported by the connecting zone 9.4 prevents the thickness of the forming area 9.4 from decreasing excessively. Thus, the forming area 1.0 is formed with all the advantages described above, and the generation of weaknesses in the formed film 1 is avoided in a simple manner.

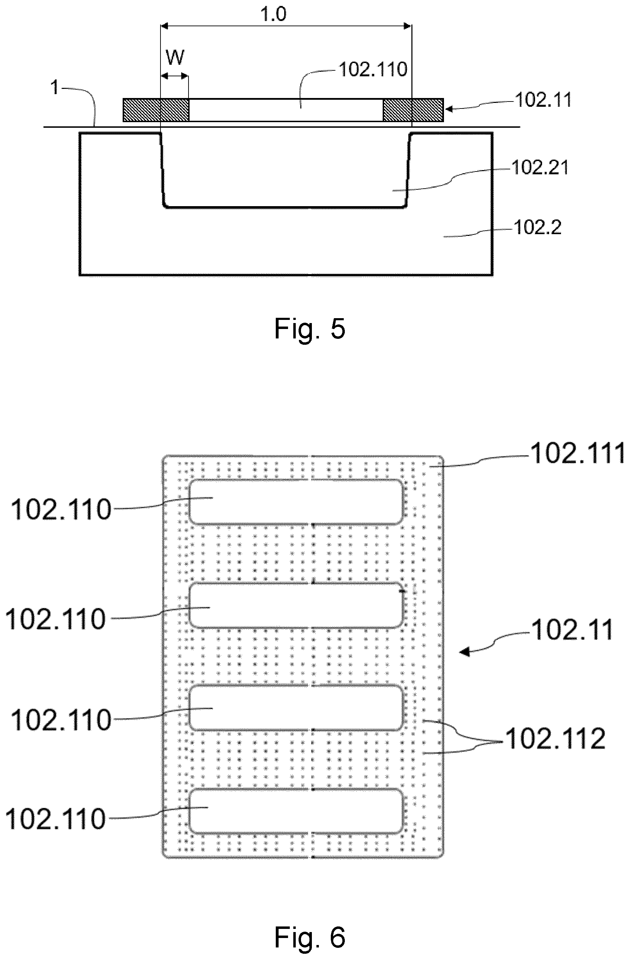

The upper tool 102.1 of the forming station 102 comprises a heating plate 102.11 with a heating surface 102.111 configured to heat the film 1 by contact, which delimits a central recess 102.110. The width W of the external contour 1.00 of the film1 can be defined as the distance between the central recess 102.110 and one end of the cavity 102.21 of the lower tool 102.2, as represented in Figure 5.

Preferably the width W of the external contour 1.00 depends on the depth 1.1 to be generated with the forming. Using the same external contour 1.00 of film 1 for different forming depths 1.1, the result may not be the most appropriate in all cases, being worse the greater the depth 1.1. The greater the depth 1.1 required for the cavity 9.0 generated after forming the forming area 1.0, the greater the need for stretching to be supported by the forming area 1.0 (especially by the second zone of the forming area 1.0), and it has been discovered that the greater the depth 1.1, the further the part of the forming area 1.0 heated to the second temperature is from the connection zone 9.4, this problem being solved by relating the width W of said external contour 1.00 to said depth 1.1.

Preferably, the maximum width W of the external contour 1.00 of the forming area 1.0 is equal to two sevenths of said depth 1.1. By setting a limit for this width W, it is ensured that the part of the forming area 1.0 which becomes the wall 9.2 of the cavity 9.0 is heated to the second temperature, without said heating affecting the connecting zone 9.4, and it has been found that the limit of two sevenths makes it possible to maintain the same ratio in all cases, without having a negative effect on the result. Logically, it is also possible to heat the rest of film 1 that does not belong to forming area 1.0, and the selected width W must be such that there is a central area 1.01 sufficient to be able to form to the required depth 1.1.

In the second heating step, the external contour 1.00 of the forming area 1.0 is preferably suctioned in a first direction to contact a heating plate 102.11 arranged in a forming station 102 of the machine 100.

The method comprises a forming step after the two heating steps, in which the forming area 1.0 is formed to obtain a cavity 9.0 with the shape shown by way of example in Figures 2 and 3 and described above. In the forming step, the forming area 1.0 is displaced in a second direction opposite to the first direction.

The first heating step is executed at a preheating station 101 of the machine 100, and the second heating step and the forming step are executed at a forming station 102 of said machine 100 which is arranged downstream of the preheating station 101. The method comprises a forward step between the first heating step and the second heating step, and in said forward step the forming area 1.0 heated at the preheating station 101 is moved from said preheating station 101 to the forming station 102 in the forward direction X. The first direction and the second direction in which the forming area 1.0 is moved at the forming station 102 are preferably perpendicular to said forward direction X. The forward direction X is preferably horizontal and said first and second directions are preferably vertical.

By applying the heating steps in different physical spaces, it is even more evident that the risk of temperature homogenisation throughout the forming area 1.0 is eliminated, since the two heat sources (one in the pre-heating station 101 and the other in the forming station 102) do not coincide and one does not affect the other.

In the first heating step, at least one forming area 1.0 of the film 1 is pressed against at least one heating plate 101.1 of the preheating station 101 to heat the forming area 1.0 to the first temperature. Preferably, the forming area 1.0 of the film 1 is clamped between two heating plates 101.1 and 101.2 of the preheating station 101, both heating plates 101.1 and 101.2 being preferably at the same temperature or at a similar temperature (±10°C for example), thus heating said forming area 1.0 when clamped between said heating plates 101.1 and 101.2.

Depending on the material and thickness of the film 1 (which can be mono-layer or multi-layer), thermoforming can be carried out for different packaging applications. For example, for vacuum packaging when the film 1 is a film known in the industry as a flexible film, such as films comprising a polypropylene or polyamide layer of less than 300 microns. In these cases, the forming of the cavity 9.0 is furthermore done in such a way that the cavity surface of the cavity 9.0 generated comprises an area at least 3 times larger than the forming area 1.0 of the film 1 before forming (where conventionally this would only be possible with the mechanical aid).

In other cases, thermoforming may be performed for packs adapted for modified atmosphere packaging, conventional atmosphere packaging, or other types of packaging, where the film 1 is a film known in the industry as rigid film, which comprises a lower elasticity than flexible films, for example by being composed of one or more other materials and/or different thicknesses. In these cases, the forming of the cavity 9.0 is done in such a way that the cavity surface of the cavity 9.0 generated comprises an area at least 2.5 times larger than the forming area 1.0 of the film 1 before forming (where conventionally this would only be possible with the mechanical aid).

A second aspect of the invention relates to a thermoforming machine 100, as depicted by way of example in Figure 1. The machine 100 comprises a pre-heating station 101 in which a forming area 1.0 of a plastic film 1 is heated, and a forming station 102 downstream of the pre-heating station 101 in which said forming area 1.0 heated in the pre-heating station 101 is formed.

The preheating station 101 is configured to heat the forming area 1.0 to a given first temperature. Said preheating station 101 comprises at least one preheating plate 101.1 for heating the forming area 1.0. Preferably the preheating station 101 comprises a first preheating plate 101.1 and a second preheating plate 101.2 facing each other and configured to imprison the forming area 1.0 between them to heat it. Preferably both preheating plates 101.1 and 101.2 are caused to move to clamp the forming area 1.0, but only one of said heating plates 101.1 and 101.2 may be moved. Preferably both heating plates 101.1 and 101.2 are configured to be heated to the same temperature or to a similar temperature (±10°C for example).

The forming station 102 comprises an upper tool 102.1 and a lower tool 102.2 facing each other and configured to move relative to each other in a direction perpendicular to the forward direction X. the tools 102.1 and 102.2 are arranged at a first relative position to allow the displacement of said film 1 in the forward direction X between them. The lower tool 102.2 comprises a cavity 102.21 that has a specific depth (and a specific shape), equivalent to the depth 1.1 of the cavity 9.0 that is intended to be formed in the film 1 (and to the shape that is intended to be achieved). The forming area 1.0 of film 1 therefore corresponds to the part of said film1 that is arranged facing said cavity 102.21 of the lower tool 102.2, in the second heating step.

The upper tool 102.1 of the forming station 102 comprises a heating plate 102.11, with a heating surface 102.111 configured to heat the film 1 by contact and which delimits a central recess 102.110 as previously described. The heating plate 102.11 thus has an annular shape as shown in Figure 6. The central area 1.01 of the forming area 1.0 of the film 1 corresponds to the area of the film 1 that is arranged facing the central recess 102.110 of the heating plate 102.11 of the upper tool 102.1, and consequently will have the same shape and dimensions as the external contour of said central recess 102.110 of the heating plate 102.11.

The explanation about the width W of the external contour given for the first aspect of the invention is also valid for the second aspect.

The heating surface 102.111 of the forming station 102 is configured to heat the external contour 1.00 of said forming area 1.0 surrounding a central zone 1.01 of said forming area 1.0 to a second temperature greater than the first temperature, in such a way that a temperature difference is generated between the external contour 1.00 and the central zone 1.01 of the forming area 1.0. The forming station 102 is further configured to form said forming area 1.0 and comprises at least one cavity 102.21 on which the film 1 to be formed is arranged, in such a way that said film 1 acquires the shape of said cavity 102.21 after being formed. In some embodiments, such as the one shown in Figure 1, the forming station 102 may comprise a plurality of cavities 102.21 to form a plurality of forming areas 1.0 simultaneously.

The machine 100 may comprise a control unit 103 which is communicated with the forming station 102 and which is configured to cause said forming station 102 to form the forming area 1.0 after heating the external contour 1.00 of said forming area 1.0 to the second temperature.

The forming station 102 comprises means 102.8 for generating a pressure difference between an upper part and a lower part of said cavity 102.21 between which said film 1 is arranged, to cause the forming of said film 1.

The heating plate 102.11 of the forming station 102 comprises a plurality of holes 102.112, and the means 102.8 of said forming station 102 are configured to suck the external contour 1.00 of the forming area 1.0 of the film 1 through said holes 102.112 during the second heating step of the external contour 1.00.

The machine 100 may comprise a configuration adapted to support the method of the invention, in any of its embodiments and/or configurations, said configuration of the machine 100 being adapted to the corresponding embodiment and/or configuration of the method. Likewise, the method may be adapted to be implemented in the machine 100, in any of its embodiments and/or configurations, said method being adapted to the corresponding embodiment and/or configuration of the machine 100.

## Claims

1. Plastic film thermoforming method for a thermoforming machine, wherein at least one forming area (1.0) of the plastic film (1) is heated and formed, wherein the method comprises a first heating step in which said forming area (1.0) is heated to a first temperature, a second heating step after the first heating step in which an external contour (1.00) of said forming area (1.0) surrounding a central zone (1.01) of said forming area (1.0) is heated to a second temperature higher than the first temperature, such that a temperature difference is generated between the external contour (1.00) and the central zone (1.01) of the forming area (1.0), and a forming step, subsequent to the two heating steps, in which said forming area (1.0) is formed, wherein the first heating step is executed at a preheating station (101) of the thermoforming machine (100) and wherein the second heating step and the forming step are executed at a forming station (102) of said thermoforming machine (100) which is arranged downstream of the preheating station (101), the method comprising a forward step between the first heating step and the second heating step in which the forming area (1.0) heated in the preheating station (101) is moved from the preheating station (101) to the forming station (102), the method being **characterized in that** in the second heating step the only part of the forming area (1.0) that is directly heated to the second temperature is the external contour (1.00) with an annular heating plate (102.11) of the forming station (102).

2. Plastic film thermoforming method according to claim 1, wherein in the second heating step at least the external contour (1.00) of the forming area (1.0) is caused to be displaced in a first direction, preferably by suction, so that only said external contour (1.00) of the forming area (1.0) contacts a heating plate (102.11) of the forming station (102), said external contour (1.00) being heated to the second temperature as a result of said contact, and wherein to perform the forming of the forming area (1.0) in the forming station (102), the forming area (1.0) is caused to move in a second direction opposite to the first direction, by suction and/or air injection, once the external contour (1.00) has reached the second temperature.

3. Plastic film thermoforming method according to claim 1 or 2, wherein after the forming step the forming area (1.0) comprises a cavity (9.0) of a given depth (1.1), the cavity (9.0) comprising a central base (9.1), at least one wall (9.2) and a connecting zone (9.4) between said base (9.0) and said wall (9.2), said connecting zone (9.4) being in the central zone (1.01) of the forming area (1.0) before said forming area (1.0) is formed.

4. Plastic film thermoforming method according to any of claims 1 to 3, wherein in the forming step the film (1) is formed to a given depth (1.1) and in the second heating step an external contour (1.00) of said film (1) with a maximum width (W) equal to two sevenths of said depth (1.1) is heated.

5. Plastic film thermoforming method according to any of claims 1 to 4, wherein in the first heating step at least the forming area (1.0) of the film (1) is pressed against at least one preheating plate (101.1) of the preheating station (101).

6. Thermoforming machine comprising a preheating station (101) in which a forming area (1.0) of a plastic film (1) is heated, and a forming station (102) downstream of the preheating station (101) in which said forming area (1.0) heated in the preheating station (101) is formed, wherein the preheating station (101) is configured to heat the forming area (1.0) to a given first temperature, the forming station (102) being configured to heat an external contour (1.00) of said forming area (1.0) surrounding a central zone (1.01) of said forming area (1.0) at a second temperature higher than the first temperature, such that a temperature difference is generated between the external contour (1.00) and the central zone (1.01) of the forming area (1.0), said forming station (102) being further configured to form said forming area (1.0). wherein the forming station (102) comprises an annular heating plate (102.11).

7. Thermoforming machine according to claim 6, wherein the forming station (102) is configured to form the forming area (1.0) of the film (1) such that said forming area (1.0) comprises a given depth (1.1) after the forming, the heating plate (102.11) of said forming station (102) comprising a central recess (102.110) complementary to the central area (1.01) of the forming area (1.0) and a heating surface (102.111) around said central recess (102.110), said heating surface (102.111) being configured to contact at least the external contour (1.00) of the forming area (1.0) comprising a width (W) equal to or less than two sevenths of said depth (1.1).

8. Thermoforming machine according to claim 6 or 7, wherein the heating surface (102.111) of the heating plate (102.11) of the forming station (102) comprises a plurality of holes (102.112), said forming station (102) comprising means for sucking the external contour (1.00) of the forming area (1.0) of the film (1) through said holes (102.112) to cause said external contour (1.00) to contact the heating plate (102.11) of said forming station (102) to heat it.

9. Thermoforming machine according to any of claims 6 to 8, wherein the forming station (102) comprises at least one cavity (102.21) on which the film (1) to be formed is arranged and means (102.8) for generating a pressure difference between an upper part and a lower part of said cavity (102.21) between which said film (1) is arranged, to cause the forming of said film (1).

10. Thermoforming machine according to any of claims 6 to 9, comprising a control unit (103) communicated with the forming station (102) and configured to cause said forming station (102) to form the forming area (1.0) after the heating of the external contour (1.00) of said forming area (1.0) to the second temperature.

11. Thermoforming machine according to any of claims 6 to 10, wherein the preheating station (101) comprises at least one preheating plate (101.1) configured to heat the film (1) to the first temperature by contact.

12. Thermoforming machine according to any of claims 6 to 11, which is configured to implement the method according to any one of claims 1 to 5.

## Patentansprüche

1. Verfahren zum Thermoformen von Kunststofffilm für eine Thermoformmaschine, wobei mindestens ein Formungsbereich (1.0) des Kunststofffilms (1) erwärmt und geformt wird, wobei das Verfahren einen ersten Erwärmungsschritt, in dem der Formungsbereich (1.0) auf eine erste Temperatur erwärmt wird, einen zweiten Erwärmungsschritt nach dem ersten Erwärmungsschritt, in dem eine Außenkontur (1.00) des Formungsbereichs (1.0), die eine zentrale Zone (1.01) des Formungsbereichs (1.0) umgibt, auf eine zweite Temperatur erwärmt wird, die höher ist als die erste Temperatur, so dass ein Temperaturunterschied zwischen der Außenkontur (1.00) und der zentralen Zone (1.01) des Formungsbereichs (1.0) generiert wird, und einen Formungsschritt im Anschluss an die beiden Erwärmungsschritte umfasst, in dem der Formungsbereich (1.0) geformt wird, wobei der erste Erwärmungsschritt in einer Vorwärmstation (101) der Thermoformmaschine (100) ausgeführt wird und wobei der zweite Erwärmungsschritt und der Formungsschritt in einer Formungsstation (102) der Thermoformmaschine (100) ausgeführt werden, die stromabwärts der Vorwärmstation (101) angeordnet ist, wobei das Verfahren einen Vorwärtsschritt zwischen dem ersten Erwärmungsschritt und dem zweiten Erwärmungsschritt umfasst, in dem der Formungsbereich (1.0), der in der Vorwärmstation (101) erwärmt wird, von der Vorwärmstation (101) zu der Formungsstation (102) bewegt wird, wobei das Verfahren **dadurch gekennzeichnet ist, dass** im zweiten Erwärmungsschritt der einzige Teil des Formungsbereichs (1.0), der direkt auf die zweite Temperatur erwärmt wird, die Außenkontur (1.00) mit einer ringförmigen Erwärmungsplatte (102.11) der Formungsstation (102) ist.

2. Verfahren zum Thermoformen von Kunststofffilm nach Anspruch 1, wobei im zweiten Erwärmungsschritt veranlasst wird, dass mindestens die Außenkontur (1.00) des Formungsbereichs (1.0) in eine erste Richtung verschoben wird, vorzugsweise durch Saugen, so dass nur die Außenkontur (1.00) des Formungsbereichs (1.0) mit einer Erwärmungsplatte (102.11) der Formungsstation (102) in Kontakt kommt, wobei die Außenkontur (1.00) infolge des Kontakts auf die zweite Temperatur erwärmt wird, und wobei zum Durchführen des Formens des Formungsbereichs (1.0) in der Formungsstation (102) veranlasst wird, dass sich der Formungsbereich (1.0) durch Saugen und/oder Lufteinspritzung in eine zweite Richtung entgegengesetzt zur ersten Richtung bewegt, sobald die Außenkontur (1.00) die zweite Temperatur erreicht hat.

3. Verfahren zum Thermoformen von Kunststofffilm nach Anspruch 1 oder 2, wobei nach dem Formungsschritt der Formungsbereich (1.0) einen Hohlraum (9.0) einer gegebenen Tiefe (1.1) umfasst, wobei der Hohlraum (9.0) eine zentrale Basis (9.1), mindestens eine Wand (9.2) und eine Verbindungszone (9.4) zwischen der Basis (9.0) und der Wand (9.2) umfasst, wobei die Verbindungszone (9.4) in der zentralen Zone (1.01) des Formungsbereichs (1.0) liegt, bevor der Formungsbereich (1.0) geformt wird.

4. Verfahren zum Thermoformen von Kunststofffilm nach einem der Ansprüche 1 bis 3, wobei im Formungsschritt der Film (1) bis zu einer gegebenen Tiefe (1.1) geformt wird und im zweiten Erwärmungsschritt eine Außenkontur (1.00) des Films (1) mit einer maximalen Breite (W) gleich zwei Siebteln der Tiefe (1.1) erwärmt wird.

5. Verfahren zum Thermoformen von Kunststofffilm nach einem der Ansprüche 1 bis 4, wobei im ersten Erwärmungsschritt mindestens der Formungsbereich (1.0) des Films (1) gegen mindestens eine Vorwärmplatte (101.1) der Vorwärmstation (101) gedrückt wird.

6. Thermoformmaschine, umfassend eine Vorwärmstation (101), in der ein Formungsbereich (1.0) eines Kunststofffilms (1) erwärmt wird, und eine Formungsstation (102) stromabwärts der Vorwärmstation (101), in der der in der Vorwärmstation (101) erwärmte Formungsbereich (1.0) geformt wird, wobei die Vorwärmstation (101) dazu konfiguriert ist, den Formungsbereich (1.0) auf eine gegebene erste Temperatur zu erwärmen, wobei die Formungsstation (102) dazu konfiguriert ist, eine Außenkontur (1.00) des Formungsbereichs (1.0), die eine zentrale Zone (1.01) des Formungsbereichs (1.0) umgibt, auf eine zweite Temperatur zu erwärmen, die höher ist als die erste Temperatur, so dass ein Temperaturunterschied zwischen der Außenkontur (1.00) und der zentralen Zone (1.01) des Formungsbereichs (1.0) generiert wird, wobei die Formungsstation (102) ferner dazu konfiguriert ist, den Formungsbereich (1.0) zu formen, wobei die Formungsstation (102) eine ringförmige Erwärmungsplatte (102.11) umfasst.

7. Thermoformmaschine nach Anspruch 6, wobei die Formungsstation (102) dazu konfiguriert ist, den Formungsbereich (1.0) des Films (1) derart zu formen, dass der Formungsbereich (1.0) nach dem Formen eine gegebene Tiefe (1.1) umfasst, wobei die Erwärmungsplatte (102.11) der Formungsstation (102) eine zentrale Aussparung (102.110), die zu dem zentralen Bereich (1.01) des Formungsbereichs (1.0) komplementär ist, und eine Erwärmungsoberfläche (102.111) um die zentrale Aussparung (102.110) herum umfasst, wobei die Erwärmungsoberfläche (102.111) dazu konfiguriert ist, mindestens mit der Außenkontur (1.00) des Formungsbereichs (1.0) in Kontakt zu kommen, die eine Breite (W) umfasst, die gleich oder kleiner als zwei Siebteln der Tiefe (1.1) ist.

8. Thermoformmaschine nach Anspruch 6 oder 7, wobei die Erwärmungsoberfläche (102.111) der Erwärmungsplatte (102.11) der Formungsstation (102) eine Vielzahl von Löchern (102.112) umfasst, wobei die Formungsstation (102) Mittel zum Ansaugen der Außenkontur (1.00) des Formungsbereichs (1.0) des Films (1) durch die Löcher (102.112) umfasst, um zu veranlassen, dass die Außenkontur (1.00) mit der Erwärmungsplatte (102.11) der Formungsstation (102) in Kontakt kommt, um sie zu erwärmen.

9. Thermoformmaschine nach einem der Ansprüche 6 bis 8, wobei die Formungsstation (102) mindestens einen Hohlraum (102.21), auf dem der zu formende Film (1) angeordnet ist, und Mittel (102.8) zum Generieren eines Druckunterschieds zwischen einem oberen Teil und einem unteren Teil des Hohlraums (102.21) umfasst, zwischen denen der Film (1) angeordnet ist, um das Formen des Films (1) zu veranlassen.

10. Thermoformmaschine nach einem der Ansprüche 6 bis 9, umfassend eine Steuereinheit (103), die mit der Formungsstation (102) in Verbindung steht und dazu konfiguriert ist, zu veranlassen, dass die Formungsstation (102) den Formungsbereich (1.0) nach dem Erwärmen der Außenkontur (1.00) des Formungsbereichs (1.0) auf die zweite Temperatur formt.

11. Thermoformmaschine nach einem der Ansprüche 6 bis 10, wobei die Vorwärmstation (101) mindestens eine Vorwärmplatte (101.1) umfasst, die dazu konfiguriert ist, den Film (1) durch Kontakt auf die erste Temperatur zu erwärmen.

12. Thermoformmaschine nach einem der Ansprüche 6 bis 11, die dazu konfiguriert ist, das Verfahren nach einem der Ansprüche 1 bis 5 zu implementieren.

## Revendications

1. Procédé de thermoformage de film en plastique pour une machine de thermoformage, dans lequel au moins une zone de formage (1.0) du film en plastique (1) est chauffée et formée, dans lequel le procédé comprend une première étape de chauffage dans laquelle ladite zone de formage (1.0) est chauffée jusqu'à une première température, une deuxième étape de chauffage après la première étape de chauffage dans laquelle un contour externe (1.00) de ladite zone de formage (1.0) entourant une zone centrale (1.01) de ladite zone de formage (1.0) est chauffé jusqu'à une deuxième température supérieure à la première température, de telle sorte que une différence de température est générée entre le contour externe (1.00) et la zone centrale (1.01) de la zone de formage (1.0), et une étape de formage, à la suite des deux étapes de chauffage, dans laquelle ladite zone de formage (1.0) est formée, dans lequel la première étape de chauffage est réalisée dans un poste de préchauffage (101) de la machine de thermoformage (100) et dans lequel la deuxième étape de chauffage et l'étape de formage sont réalisées dans un poste de formage (102) de ladite machine de thermoformage (100) qui est disposé en aval du poste de préchauffage (101), le procédé comprenant une étape d'avance entre la première étape de chauffage et la deuxième étape de chauffage dans laquelle la zone de formage (1.0) chauffée dans le poste de préchauffage (101) est déplacée du poste de préchauffage (101) vers le poste de formage (102), le procédé étant **caractérisé en ce que,** dans la deuxième étape de chauffage, la seule partie de la zone de formage (1.0) qui est directement chauffée jusqu'à la deuxième température est le contour externe (1.00) avec une plaque de chauffage annulaire (102.11) du poste de formage (102).

2. Procédé de thermoformage de film en plastique selon la revendication 1, dans lequel, dans la deuxième étape de chauffage, au moins le contour externe (1.00) de la zone de formage (1.0) est déplacé dans un premier sens, de préférence par aspiration, de sorte que seulement ledit contour externe (1.00) de la zone de formage (1.0) entre en contact avec une plaque de chauffage (102.11) du poste de formage (102), ledit contour externe (1.00) étant chauffé jusqu'à la deuxième température en raison dudit contact, et dans lequel, pour réaliser le formage de la zone de formage (1.0) dans le poste de formage (102), la zone de formage (1.0) est déplacée dans un deuxième sens opposé audit premier sens, par aspiration et/ou par injection d'air, une fois que le contour externe (1.00) a atteint la deuxième température.

3. Procédé de thermoformage de film en plastique selon la revendication 1 ou 2, dans lequel, après l'étape de formage, la zone de formage (1.0) comprend une cavité (9.0) d'une profondeur (1.1) donnée, la cavité (9.0) comprenant une base centrale (9.1), au moins une paroi (9.2) et une zone de liaison (9.4) entre ladite base (9.0) et ladite paroi (9.2), ladite zone de liaison (9.4) étant dans la zone centrale (1.01) de la zone de formage (1.0) avant le formage de ladite zone de formage (1.0).

4. Procédé de thermoformage de film en plastique selon l'une quelconque des revendications 1 à 3, dans lequel, dans l'étape de formage, le film (1) est formé jusqu'à une profondeur (1.1) donnée et, dans la deuxième étape de chauffage, un contour externe (1.00) dudit film (1) avec une largeur (W) maximale égale à deux septièmes de ladite profondeur (1.1) est chauffé.

5. Procédé de thermoformage de film en plastique selon l'une quelconque des revendications 1 à 4, dans lequel, dans la première étape de chauffage, au moins la zone de formage (1.0) du film (1) est pressée contre au moins une plaque de préchauffage (101.1) du poste de préchauffage (101).

6. Machine de thermoformage comprenant un poste de préchauffage (101) dans lequel une zone de formage (1.0) d'un film en plastique (1) est chauffée, et un poste de formage (102) en aval du poste de préchauffage (101) dans lequel ladite zone de formage (1.0) chauffée dans le poste de préchauffage (101) est formée, dans laquelle le poste de préchauffage (101) est configuré pour chauffer la zone de formage (1.0) jusqu'à une première température donnée, le poste de formage (102) étant configuré pour chauffer un contour externe (1.00) de ladite zone de formage (1.0) entourant une zone centrale (1.01) de ladite zone de formage (1.0) à une deuxième température supérieure à la première température, de telle sorte qu'une différence de température est générée entre le contour externe (1.00) et la zone centrale (1.01) de la zone de formage (1.0), ledit poste de formage (102) étant configuré en outre pour former ladite zone de formage (1.0), dans laquelle le poste de formage (102) comprend une plaque de chauffage annulaire (102.11).

7. Machine de thermoformage selon la revendication 6, dans laquelle le poste de formage (102) est configuré pour former la zone de formage (1.0) du film (1) de telle sorte que ladite zone de formage (1.0) comprend une profondeur (1.1) donnée après le formage, la plaque de chauffage (102.11) dudit poste de formage (102) comprenant un évidement central (102.110) complémentaire de la zone centrale (1.01) de la zone de formage (1.0) et une surface de chauffage (102.111) autour dudit évidement central (102.110), ladite surface de chauffage (102.111) étant configurée pour entrer en contact au moins avec le contour externe (1.00) de la zone de formage (1.0) comprenant une largeur (W) égale ou inférieure à deux septièmes de ladite profondeur (1.1).

8. Machine de thermoformage selon la revendication 6 ou 7, dans laquelle la surface de chauffage (102.111) de la plaque de chauffage (102.11) du poste de formage (102) comprend une pluralité de trous (102.112), ledit poste de formage (102) comprenant des moyens pour aspirer le contour externe (1.00) de la zone de formage (1.0) du film (1) à travers lesdits trous (102.112) pour amener ledit contour externe (1.00) à entrer en contact avec la plaque de chauffage (102.11) dudit poste de formage (102) pour le chauffer.

9. Machine de thermoformage selon l'une quelconque des revendications 6 à 8, dans laquelle le poste de formage (102) comprend au moins une cavité (102.21) sur laquelle le film (1) à former est disposé et des moyens (102.8) pour générer une différence de pression entre une partie supérieure et une partie inférieure de ladite cavité (102.21) entre lesquelles ledit film (1) est disposé, pour provoquer le formage dudit film (1).

10. Machine de thermoformage selon l'une quelconque des revendications 6 à 9, comprenant une unité de contrôle (103) en communication avec le poste de formage (102) et configurée pour amener ledit poste de formage (102) à former la zone de formage (1.0) après le chauffage du contour externe (1.00) de ladite zone de formage (1.0) jusqu'à la deuxième température.

11. Machine de thermoformage selon l'une quelconque des revendications 6 à 10, dans laquelle le poste de préchauffage (101) comprend au moins une plaque de préchauffage (101.1) configurée pour chauffer le film (1) jusqu'à la première température par contact.

12. Machine de thermoformage selon l'une quelconque des revendications 6 à 11, qui est configurée pour mettre en œuvre le procédé selon l'une quelconque des revendications 1 à 5.
